# EUROPÄISCHE PATENTSCHRIFT

(11) **EP 2 019 224 B1**
(45) Veröffentlichungstag und Bekanntmachung des Hinweises auf die Patenterteilung: **13.06.2012**
(21) Anmeldenummer: 07014701.2
(22) Anmeldetag: 26.07.2007
(51) Int. Cl.: F16D 13/68

(54) **Lammellenträger einer Reibkupplung**
Disc support for a friction coupling
Support à lamelles d'un embrayage à friction

(43) Veröffentlichungstag der Anmeldung: 28.01.2009
(73) Patentinhaber: Hoerbiger Antriebstechnik GmbH, 86956 Schongau (DE)
(72) Erfinder: Sayhoun, Ahmed, 82363 Weilheim (DE); Nickel, Falk, 86925 Fuchstal (DE); Ruprecht, Georg, 87640 Biessenhofen (DE)
(74) Vertreter: Kitzhofer, Thomas

(56) Entgegenhaltungen:
- JP-A- 58 160 630
- JP-A- 61 233 222
- JP-A- 63 076 922
- US-A- 4 846 326
- US-A- 5 137 131

## Beschreibung

Die Erfindung betrifft einen Lamellenträger für eine Reibungskupplung gemäß Anspruch 1 sowie eine Reibungskupplung gemäß dem Oberbegriff des Anspruches 12.

Die fortschreitende Diversifizierung der Modellpaletten von Fahrzeugherstellern auf dem weltweiten Fahrzeugmarkt führt zunehmend zu kleineren Stückzahlen einzelner Modelle. Hinzu kommen kürzere Modell-Lebenszyklen durch regelmäßige Modellüberarbeitungen. Für die Baugruppen im Antriebsstrang von Fahrzeugen (Automobile und/oder Motorräder) bedeutet dies häufige Designänderungen, da zunehmend größere Drehmomente übertragen oder Gewichte reduziert werden müssen.

Im Falle von Reibungskupplungen (s.z.B. JP 63 076 922A) im Antriebsstrang von Fahrzeugen sind die Gehäuse der auf dem Markt bekannten Kupplungssysteme nach dem Stand der Technik z.B. durch Stahlumformprozesse, durch Gießprozesse oder durch Leichtmetall-Druck-Gießprozesse hergestellt. Diese Verfahren erfordern kosten- und zeitintensive Werkzeuge zur Formgebung. Im Falle einer Modellüberarbeitung fallen bei Designänderungen, wie z.B. kleinere oder größere Durchmesser oder kleinere und größere Baulängen, hohe Werkzeugkosten an.

Insbesondere bei einer Ausführung in Leichtmetall-Gussbauweise lässt sich die Drehmomentübertragung zur Welle im gegebenen Bauraum nicht aus Leichtmetall realisieren. In diesen Fällen wird heute ein Nabenelement aus einem festeren Werkstoff, z.B. Stahl in das Leichtmetallteil mit eingegossen. Diese Lösung ist prozesstechnisch aufwändig und damit teuer und birgt den Nachteil von Thermospannungen im Bauteil durch die unterschiedlichen Ausdehnungskoeffizienten in sich.

Es ist daher Aufgabe der vorliegenden Erfindung, einen Lamellenträger einer Reibungskupplung zu schaffen, der ein flexibles Design ermöglicht, das gleichzeitig niedrige Werkzeugkosten mit sich bringt, eine schnelle Verfügbarkeit gewährleistet und im Einzelteilpreis konkurrenzfähig zu bekannten Lamellenträgern ist.

Die Lösung dieser Aufgabe erfolgt durch die Merkmale des Anspruchs 1 bzw. des Anspruchs 12.

Erfindungsgemäß wird ein Lamellenträger mit einem modularen Aufbau in Form einer aus flexibel einsetzbaren Einzelteilen montierten Baugruppe geschaffen. Die Einzelteile lassen sich in verschiedenen Kombinationen zu vielfältig einsetzbaren Lamellenträgern montieren. Die Einzelteile sind für Prototypen und Kleinstserien mit geeigneten Verfahren, z.B. Laserschneiden, schnell und kostengünstig herstellbar und damit verfügbar. Für größere Stückzahlen kann ohne Designänderung auf entsprechend günstige Verfahren gewechselt werden, wie z.B. Stanzen. Durch die Mehrfachnutzung der Einzelteile zum Aufbau des Lamellenträgers werden niedrige Produktionskosten erzielt.

Ein weiterer Vorteil der Erfindung gegenüber bekannten Lösungen ist die Möglichkeit, Zusatzfunktionen zu integrieren, wie z.B. Drehschwingungsdämpfer bei Kupplungen für Motorräder. Herstellkosten und Bauraum werden auf diesem Weg durch den Entfall von separaten Bauteilen, die diese Funktion im konventionellen Aufbau übernehmen, gesenkt. Die erfindungsgemäße Ausführung ermöglicht den Einsatz von Werkstoffen, die eine höhere Flächenpressung der Lamellen zulassen. Auf diesem Weg kann die Dicke der Lamellen reduziert und dadurch der Bauraumbedarf gesenkt werden.

Das Design-Konzept der Reibungskupplung gemäß Anspruch 12 ist ideal für den Einsatz in Motorrädern, aber grundsätzlich nicht auf bestimmte Einsatzbereiche beschränkt, sondern kann auch in jedweder Art von Automobilen (wie z.B. auch Traktoren, Landmaschinen, Baumaschinen) eingesetzt werden. Ferner ist es erfindungsgemäß möglich, sowohl trockene wie auch nasse Lamellenkupplungen zu schaffen.

Insbesondere ist als ein Einzelteil eine Nabe zur Verbindung mit einer Getriebewelle vorgesehen. Die Nabe ist mit der Grundplatte verbunden, wozu verschiedene Verfahren wie z.B. Umformprozesse, thermische Fügeprozesse, Pressverbindungen oder auch formschlüssige Verbindungen möglich sind. Um die Nabe mit der Getriebewelle formschlüssig verbinden zu können, weist diese einen Nabenkörper mit einer Innenverzahnung auf, die mit einer entsprechenden Außenverzahnung der Getriebewelle in Eingriff gebracht werden kann.

Zusammenfassend ergeben sich erfindungsgemäß gegenüber bekannten Lösungen folgende Vorteile:
- große Flexibilität beim Design von Varianten des Lamellenträgers;
- geringe Werkzeugkosten für die Herstellung des Lamellenträgers;
- Kosteneinsparung durch Mehrfachverwendung eines Bauteils in der gleichen oder in verschiedenen Kupplungen;
- Kosteneinsparung durch Reduzierung der Teileanzahl durch Entfallen von Bauteilen;
- deutliche Verkleinerung des axialen Bauraums;
- niedrigeres Gewicht der Kupplung im Vergleich zu bekannten Kupplungen;
- niedrigeres Massenträgheitsmoment im Vergleich zu bekannten Kupplungen;
- höhere Berstdrehzahl;
- schnellere Prototyp-Verfügbarkeit durch Herstellprozesse mit geringem Werkzeugaufwand;
- bessere Kühlung und Schmierung der Reibflächen durch mehr Freiraum zur Gewährleistung des Ölflusses;
- geringeres Schleppmoment durch verbesserten Ölabfluss; und
- Vermeidung des aufwendigen Eingießens von Nabenelementen und den resultierenden Thermospannungen.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematisch auseinandergezogene perspektivische Darstellung einer Baugruppe zum Aufbau eines Lamellenträgers;
- Fig. 2: eine perspektivische Darstellung des montierten Lamellenträgers;
- Fig. 3: eine perspektivische, teilweise geschnittene Darstellung einer Reibungskupplung; und
- Fig. 4-6: Ansichten einer bevorzugten erfindungsgemässen Ausführungsform des erfindungsgemäßen Lamellenträgers.

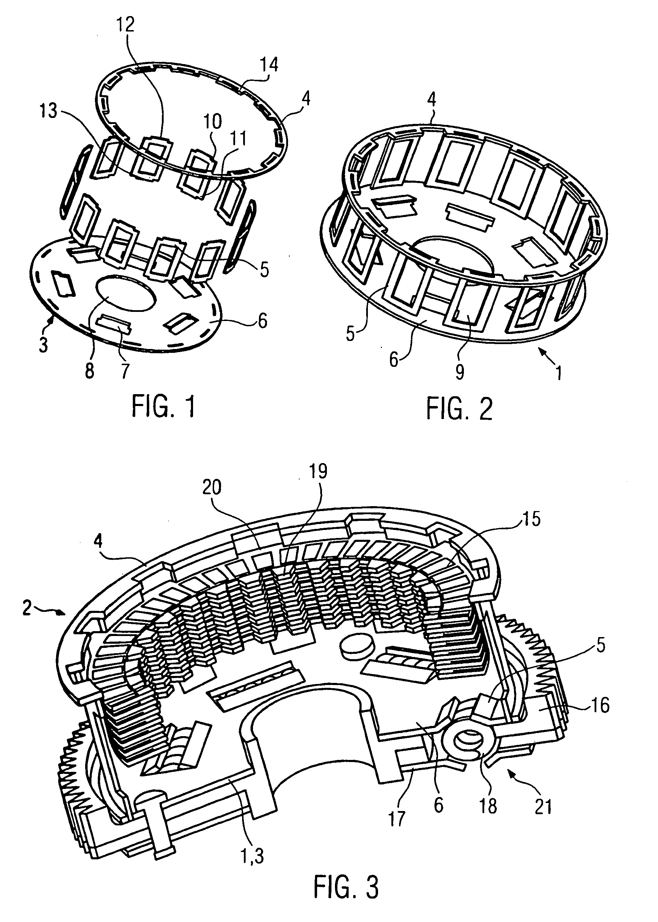

Aus einer Zusammenschau der Fig. 1 und 2 ergibt sich der Aufbau eines nicht zur Erfindung gehörenden Lamellenträgers 1 und seiner modular aufgebauten Baugruppe 3, die in Fig. 1 in auseinandergezogener Darstellung verdeutlicht ist. Gemäß Fig. 1 weist die Baugruppe 3 im Beispielsfalle einen kreisrunden Haltering 4 und eine Grundplatte 6 auf. Wie Fig. 1 verdeutlicht, ist zwischen den Bauteilen 4 und 6 im Beispielsfalle eine Mehrzahl von Stegen angeordnet, die alle gleich aufgebaut sind und von denen in Fig. 1 zwei Stege mit der Bezugsziffer 5 gekennzeichnet sind. Im Beispielsfalle werden zwölf Stege verwendet, die jeweils, wie dies Fig. 1 im Einzelnen verdeutlicht, rahmenartig und rechteckförmig mit einer rechteckigen Mittelausnehmung 9 aufgebaut sind.

An den Schmalseiten 10 und 11 der jeweiligen Stege 5 sind Laschen 12 und 13 angeordnet, wobei die Stege 5 bei der dargestellten Ausführungsform mit ihren Laschen ein planes, ebenes Teil bilden. Diese Laschen 12 und 13 dienen zur Befestigung der Stege am Haltering 4 bzw. der Grundplatte 6.

Der Haltering 4 ist beispielhaft ausgebildet und weist eine Mehrzahl von nach innen weisenden Ansätzen 14 auf. Wie Fig. 1 verdeutlicht, weist der Haltering 4 zwölf derartige Ansätze 14 auf, deren Zahl mit anderen Worten der Zahl der Stege 5 entspricht, die an den Ansätzen 14 befestigt werden.

Fig. 1 verdeutlicht schließlich beispielhaft den kreisförmigen Aufbau der Grundplatte 6, die mit einer mittigen kreisförmigen Ausnehmung 8 und mit insgesamt sechs rechteckförmigen Ausnehmungen 7 versehen ist, die zwischen der kreisförmigen Ausnehmung 8 und dem Außenumfang der Grundplatte 6 beispielhaft in gleichen Winkelabständen zueinander verteilt angeordnet sind. Diese rechteckförmigen Ausnehmungen 7 sind zur Aufnahme von Federn eines Drehschwingungsdämpfers vorgesehen, was nachfolgend anhand der Fig. 3 näher erläutert werden wird.

Fig. 2 verdeutlicht den Aufbau des aus der Baugruppe 3 zusammengesetzten Lamellenträgers 1. Wie zuvor erläutert, weist dieser im Beispielsfalle zwölf Stege 5 auf, es ist jedoch auch möglich, eine andere Anzahl von Stegen 5 je nach Einsatzfall vorzusehen.

Die Fügestellen zwischen den Einzelteilen 4, 5, 6 können zur Erzielung der notwendigen Steifigkeit und Festigkeit des Lamellenträgers 1 z.B. durch Umformprozesse, thermische Fügeprozesse, Klebeverbindungen oder Pressverbindungen hergestellt werden.

In Fig. 3 ist die Reibungskupplung 2 dargestellt, die insbesondere für Automobile und oder Motorräder verwendet werden kann.

Die Reibungskupplung 2 ist bei der dargestellten Ausführungsform mit einem Drehschwingungsdämpfer 17 versehen, der eine Mehrzahl von Federn aufweist, von denen in Fig. 1 eine Feder mit der Bezugsziffer 18 gekennzeichnet ist.

Ferner zeigt Fig. 3 die Anordnung von Reiblamellen und Gegenlamellen 19 im Lamellenträger 1, von denen eine Reiblamelle mit der Bezugsziffer 15 und der Belagträger mit der Bezugsziffer 20 gekennzeichnet ist.

Im in Fig. 3 verdeutlichten Zusammenbauzustand der Reibungskupplung 2 kann die Grundplatte 6 zusätzlich als Gegenlager 17 für die Federn 18 des integrierten Drehschwingungsdämpfers 21 dienen.

Ferner bedarf es durch geeignete Werkstoffwahl der Grundplatte 6 keiner speziellen Verschleißschutzmaßnahme zwischen den Federn 18 und der Grundplatte 6, wie dies bei herkömmlichen Kupplungen, z.B. in Motorrädern, erforderlich ist.

Dies gilt auch für den Kontaktbereich zwischen Grundplatte 6 und einem Primärrad 16, das in Fig. 3 ebenfalls dargestellt ist, was bei herkömmlichen Kupplungen, z.B. in Motorrädern, bekanntermaßen mittels eines zusätzlichen Bauteils für den Verschleißschutz ausgeführt werden muss.

Durch geeignete Werkstoffwahl der Stege 5 sind höhere Flächenpressungen zwischen den Stegen 5 und den Reiblamellen 15 möglich, wodurch gegenüber z.B. Kupplungen in Motorrädern das Trägermaterial 20 des Reibbelages der Reiblamellen 15 deutlich dünner ausgeführt und somit axialer Bauraum wesentlich eingespart werden kann.

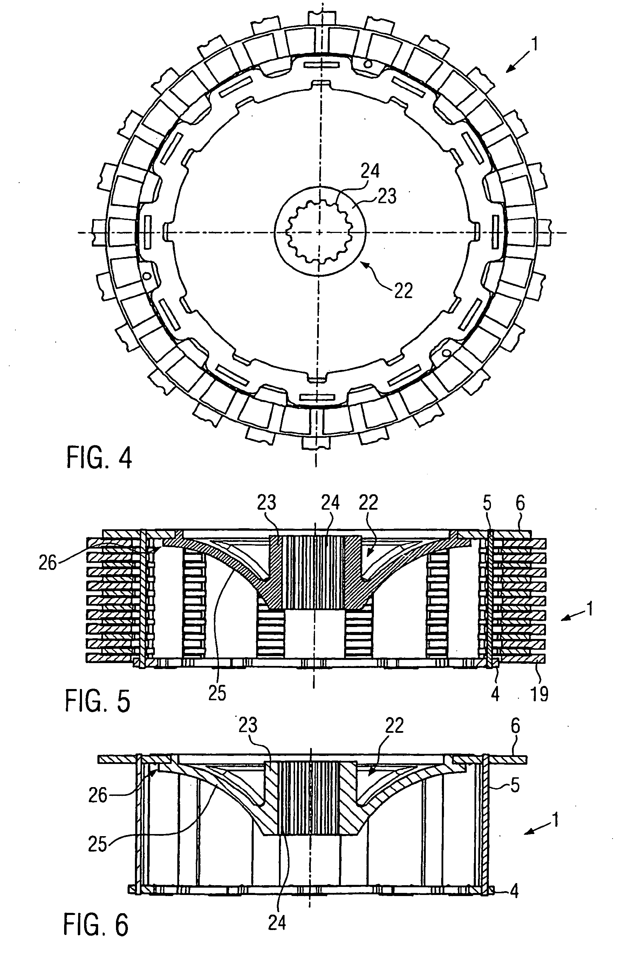

In den Fig. 4 bis 6 ist in Draufsicht und in Schnittdarstellung eine Ausführungsform des erfindungsgemäßen Lamellenträgers 1 dargestellt, dessen Grundbestandteile, wie Haltering 4, die Stege 5 und die Grundplatte 6 auf dieselbe Art und Weise aufgebaut sind, wie bei der Ausführungsform gemäß den Fig. 1 bis 3. Hinsichtlich dieser Bauteile kann daher auf die vorangehende Beschreibung verwiesen werden. Darüber hinaus sind diese Bauteile mit denselben Bezugszeichen wie in den Fig. 1 bis 3 versehen.

Zusätzlich zu den zuvor erläuterten Bauteilen der modularen Baugruppe weist der Lamellenträger 1 gemäß der Ausführungsform der Fig. 4 bis 6 eine Nabe 22 als ein weiteres separates Bauteil der Baugruppe 3 auf, die einen zylindrischen Nabenkörper 23 mit einer Innenverzahnung 24 aufweist. Die Nabe 22 ist mit der Grundplatte 6 verbunden, wozu sie einen Anschlussteil 25 aufweist, der an seinem freien Ende einen Verbindungsbereich 26 umfasst, über den die Nabe 22 mit der Grundplatte 6 verbindbar ist, wozu die eingangs beispielhaft aufgelisteten Verbindungsverfahren eingesetzt werden können.

Diese Ausführungsform des erfindungsgemäßen Lamellenträgers 1 mit integrierter Nabenfunktion ist insbesondere für Fahrzeuge mit besonderen Anforderungen an hohe Drehmomente und dichtes Package geeignet, wobei zur Erfüllung dieser Anforderungen zusätzlich geeignete Werkstoffe, wie insbesondere hochfeste Metalle wie z.B. Stahl, zum Einsatz kommen können.

### Bezugszeichenliste

- 1: Lamellenträger
- 2: Reibungskupplung
- 3: Baugruppe
- 4, 5, 6: Einzelteile (Haltering 4, Steg 5, Grundplatte 6)
- 7, 8: Durchbrechungen bzw. Ausnehmungen
- 9: Mittige Ausnehmung
- 10, 11: Schmalseiten
- 12, 13: Laschen
- 14: Ansätze
- 15: Reiblamelle
- 16: Primärrad
- 17: Gegenlager
- 18: Federn
- 19: Gegenlamelle
- 20: Träger Reibbelag
- 21: Drehschwingungsdämpfer
- 22: Nabe
- 23: Zylindrischer Nabenkörper
- 24: Innenverzahnung
- 25: Anschlussteil
- 26: Verbindungsbereich

## Patentansprüche

1. Lamellenträger (1) für eine Reibungskupplung (2), **gekennzeichnet durch** eine modular aufgebaute Baugruppe (3) aus miteinander verbindbaren Einzelteilen (4, 5, 6, 22), die einen Haltering (4), zumindest einen Steg (5), welcher als planes ebenes **durch** Laserschneiden oder Stanzen hergestelltes Teil ausgebildet ist, und eine Grundplatte (6) sowie eine Nabe (22) umfassen, die mit der Grundplatte (6) verbunden ist.

2. Lamellenträger nach Anspruch 1, **dadurch gekennzeichnet, dass** alle Einzelteile (4, 5, 6, 22) der modular aufgebauten Baugruppe (3) aus gleichen oder unterschiedlichen Materialien bestehen, die den spezifischen Anforderungen des Bauteils entsprechen und über gleiche oder unterschiedliche Fügeprozesse verbunden sind.

3. Lamellenträger nach Anspruch 1 oder 2, **dadurch gekennzeichnet, dass** die Grundplatte (6) kreisförmig ist.

4. Lamellenträger nach einem der Ansprüche 1 bis 3, **dadurch gekennzeichnet, dass** die Grundplatte (6) eine Mehrzahl von Durchbrechungen (7, 8) aufweist.

5. Lamellenträger nach einem der Ansprüche 1 bis 4, **dadurch gekennzeichnet, dass** der Steg (5) mit einer oder mehreren Ausnehmungen (9) ausgebildet ist.

6. Lamellenträger nach einem der Ansprüche 1 bis 5, **dadurch gekennzeichnet, dass** der Steg (5) an seinen Schmalseiten (10, 11) Laschen (12, 13) aufweist.

7. Lamellenträger nach Anspruch 6, **dadurch gekennzeichnet, dass** die Laschen (12, 13) an den Schmalseiten (10, 11) abgewinkelt sind.

8. Lamellenträger nach einem der Ansprüche 1 bis 7, **dadurch gekennzeichnet, dass** der Haltering (3) kreisringförmig oder polygonförmig ausgebildet ist.

9. Lamellenträger nach einem der Ansprüche 1 bis 8, **dadurch gekennzeichnet, dass** der Haltering (3) nach innen weisende Ansätze (14) aufweist.

10. Lamellenträger nach Anspruch 9, **dadurch gekennzeichnet, dass** die Zahl der Ansätze (14) der Zahl der anzubringenden Stege (5) entspricht.

11. Lamellenträger nach einem der Ansprüche 1 bis 10, **dadurch gekennzeichnet, dass** die Einzelteile (4, 5, 6) durch Umformprozesse, Pressverbindungen, Klebeverbindungen oder thermisches Fügen miteinander verbunden sind.

12. Reibungskupplung (2), insbesondere für Automobile und/oder Motorräder,
- mit einem Drehschwingungsdämpfer (21); und
- mit einem Lamellenträger (1) nach einem der vorhergehenden Ansprüche.

## Claims

1. A disc carrier (1) for a friction clutch (2), **characterized by** a modularly structured assembly (3) of individual parts (4, 5, 6, 22) that are adapted to be connected with each other and include a holding ring (4), at least one web (5) which is configured as a flat, level part manufactured by laser cutting or stamping, and a base plate (6) and a hub (22) connected with the base plate (6).

2. The disc carrier according to claim 1, **characterized in that** all individual parts (4, 5, 6, 22) of the modularly structured assembly (3) are made of the same or different materials which comply with the specific requirements of the component and are connected by the same or different joining processes.

3. The disc carrier according to claim 1 or 2, **characterized in that** the base plate (6) is circular.

4. The disc carrier according to any of claims 1 to 3, **characterized in that** the base plate (6) has a plurality of openings (7, 8).

5. The disc carrier according to any of claims 1 to 4, **characterized in that** the web (5) is formed with one or with a plurality of recesses (9).

6. The disc carrier according to any of claims 1 to 5, **characterized in that** the web (5) includes tabs (12, 13) at its narrow sides (10, 11).

7. The disc carrier according to claim 6, **characterized in that** the tabs (12, 13) are angled at the narrow sides (10, 11).

8. The disc carrier according to any of claims 1 to 7, **characterized in that** the holding ring (3) is formed to have an annular or polygonal shape.

9. The disc carrier according to any of claims 1 to 8, **characterized in that** the holding ring (3) has inwardly facing lugs (14).

10. The disc carrier according to claim 9, **characterized in that** the number of lugs (14) corresponds to the number of webs (5) to be attached.

11. The disc carrier according to any of claims 1 to 10, **characterized in that** the individual parts (4, 5, 6) are connected with each other by reshaping processes, press-fit connections, adhesive joints or thermal joining.

12. A friction clutch (2), in particular for automobiles and/or motorcycles, comprising
- a torsional vibration damper (21); and
- a disc carrier (1) according to any of the preceding claims.

## Revendications

1. Support de disques (1) pour un embrayage à friction (2), **caractérisé par** un ensemble (3) à structure modulaire composé de pièces individuelles (4, 5, 6, 22) aptes à être reliées les unes aux autres et comprenant un anneau de retenue (4), au moins une barrette (5) réalisée sous forme de pièce plate et plane fabriquée par coupage au laser ou par estampage, et une plaque de base (6) ainsi qu'un moyeu (22) relié à la plaque de base (6).

2. Support de disques selon la revendication 1, **caractérisé en ce que** toutes les pièces individuelles (4, 5, 6, 22) de l'ensemble (3) à structure modulaire sont composées de matières identiques ou différentes qui correspondent aux exigences spécifiques du composant et sont reliées au moyen de procédés d'assemblage identiques ou différents.

3. Support de disques selon la revendication 1 ou 2, **caractérisé en ce que** la plaque de base (6) est circulaire.

4. Support de disques selon l'une des revendications 1 à 3, **caractérisé en ce que** la plaque de base (6) présente une pluralité d'ouvertures (7, 8).

5. Support de disques selon l'une des revendications 1 à 4, **caractérisé en ce que** la barrette (5) est réalisée avec un ou plusieurs creux (9).

6. Support de disques selon l'une des revendications 1 à 5, **caractérisé en ce que** la barrette (5) présente des languettes (12, 13) sur ses petits côtés (10, 11).

7. Support de disques selon la revendication 6, **caractérisé en ce que** les languettes (12, 13) sont coudées sur les petits côtés (10, 11).

8. Support de disques selon l'une des revendications 1 à 7, **caractérisé en ce que** l'anneau de retenue (3) est réalisé sous forme d'anneau de cercle ou de polygone.

9. Support de disques selon l'une des revendications 1 à 8, **caractérisé en ce que** l'anneau de retenue (3) présente des saillies (14) dirigées vers l'intérieur.

10. Support de disques selon la revendication 9, **caractérisé en ce que** le nombre de saillies (14) correspond au nombre de barrettes (5) à fixer.

11. Support de disques selon l'une des revendications 1 à 10, **caractérisé en ce que** les pièces individuelles (4, 5, 6) sont reliées les unes aux autres par des procédés de mise en forme, des assemblages pressés, des assemblages collés ou par assemblage thermique.

12. Embrayage à friction (2), en particulier pour automobiles et/ou motocyclettes, présentant
- un amortisseur de vibrations torsionnelles (21) ; et
- un support de disques (1) selon l'une des revendications précédentes.
